# EUROPEAN PATENT SPECIFICATION

(11) **EP 3 205 568 B1**
(45) Date of publication and mention of the grant of the patent: **08.05.2019**
(21) Application number: 17155451.2
(22) Date of filing: 09.02.2017
(51) Int. Cl.: B62M 1/36, B62K 19/34, B62M 3/00

(54) **TRANSMISSION ASSEMBLY WITHOUT BOTTOM BRACKET FOR VELOCIPEDES**
GETRIEBEANORDNUNG OHNE TRETLAGER FÜR VELOZIPEDE
ENSEMBLE DE TRANSMISSION SANS PÉDALIER POUR VÉLOCIPÈDES

(30) Priority: 09.02.2016 IT UB20160583
(43) Date of publication of application: 16.08.2017
(73) Proprietor: BEMO SYNTH S.R.L., 59100 Prato (PO) (IT)
(72) Inventor: Brogi, Marco, 59100 Prato (PO) (IT)
(74) Representative: Fanfani, Stefano

(56) References cited:
- WO-A1-92/02402
- WO-A1-2016/015295
- DE-A1- 19 744 118
- US-A1- 2011 266 769

## Description

### Technical field

The present invention belongs to the sector of the velocipedes equipped with two or more wheels and operated by way of pedals thanks to the muscular strength exerted by a biker's legs.

More specifically, the present invention concerns a transmission assembly for velocipedes, bicycles, tricycles, and the like, without any bottom bracket, wherein the frame includes a cylindrical cavity below suitable for accommodating the front gear of the transmission, which is in turn connected to the pedals and to motion transmission means to transfer rotation to the axle of the rear wheel.

### Present status of the art

In a pedal operated velocipede, the transmission assembly is defined as the set of those devices which allow to transfer the mechanical energy provided by the movement of the biker's legs to the wheel or wheels of the vehicle. Very numerous types of transmission assemblies have been conceived with time, for instance shaft or belt transmission assemblies or more traditional chain transmission systems.

The present invention concerns velocipedes operated by the muscular strength of a biker, consequently no devices equipped with electric motors or internal combustion engines or other types of motors/engines will be taken into consideration here.

In its most elementary configuration, a traditional chain transmission assembly for velocipedes consists of a rear toothed wheel, integral with the rear wheel or wheels of the vehicle, and a front toothed wheel, connected to the pin of a bottom bracket; the latter is accommodated in an appropriate cylindrical cavity located in the lower part of the frame, generally in an intermediate position between the axle of the front wheel or wheels and the rear axle. The front toothed wheel is generally connected to a pedal crank, which is in turn connected at a first end thereof to the pin of the bottom bracket, whereas the pin of a pedal is constrained at the free end of the pedal crank; a second pedal crank is mounted at the second end of the pin of the bottom bracket and also presents a free end which the pedal is constrained to.

A biker exerting a strength onto the pedals drives into rotation the front toothed wheel, whose motion is transferred via a chain to the rear toothed wheel and consequently to the rear wheel or wheels of the velocipede, which is integral to said rear toothed wheel.

Velocipedes equipped with transmission systems without bottom bracket have been developed in the last years.

This type of velocipede without bottom bracket makes it possible to use transmission assemblies less complex and formed of a lower number of component parts as compared to the traditional systems.

The advantages offered by such technical solution are consequently evident in the light of reduction of production costs, as well as in meeting requirements related to an improved effectiveness and simplicity of the means.

In the case of velocipedes with transmission assemblies without bottom bracket, the frame usually includes, in its lower part, a cavity having a cylindrical shape which lies substantially in the plane identified by the frame of the velocipede and featuring an axis of symmetry parallel to the axles of the wheels of the vehicle.

The inside of said cylindrical cavity is suitable for coaxially accommodating a ring gear or a toothed drum.

Said ring gear is connected to pedal cranks, on which the pedals are mounted, directly connected to said gear in proximity to its external circumferential edge.

The teeth of said gear or said drum are suitable for engaging a flexible transmission element, typically a chain or a belt, to transfer motion to the driving wheel, or driving wheels, of the vehicle.

The gear has dimensions slightly smaller than the cylindrical cavity that accommodates it.

The ring gear is free to rotate with respect to the frame, being supported on each side by a plurality of bearings, usually roller bearings, secured to the frame itself.

An example of a bicycle with a transmission assembly without bottom bracket is described in French patent FR 2933952.

Other examples of folding bicycles without bottom bracket are described in international patent application PCT WO 92/02402 and in US patent application US 2015/0353160.

In some systems, a cylindrical drum is used instead of a front ring gear as described, for instance, in US patent application US 2011/266769, which is considered the closest Prior Art.

In US patent application US 2007/0007745 a tricycle is described with a transmission assembly without bottom bracket.

However, all of these systems feature a number of drawbacks in that the pedal cranks directly mounted on the front gear necessarily have an arm whose length is very reduced, otherwise it would be impossible for a biker to reach the pedals.

The forces transferred by a biker to the pedals generate a torque that is proportional to the length of the pedal cranks, which operate as levers. The shorter is the length of the arm of the pedal cranks, the smaller is the generated moment, the force applied onto the pedals being equal.

### Objects and summary of the invention

A problem is thus felt of having pedal operated velocipedes that are equipped with a transmission assembly simple and inexpensive to implement, without a bottom bracket, while simultaneously allowing an efficient transfer of the power generated by a biker's muscular strength.

These problems are very much felt in the industry of production of folding bicycles, a sector in which, as known, it is very important to combine very much reduced space occupation, simplicity, and lightness to make it possible an easy transportation of the bicycles, once it has been folded.

It will be apparent from the description and from the examples that follow that these objects and others are achieved thanks to an innovative transmission assembly for velocipedes without bottom bracket, wherein the lever arm of the force exerted by a biker onto the pedals is the same that would be obtained with a transmission assembly equipped with a traditional bottom bracket.

The transmission assembly according to the present patent application comprises a ring gear suitable for being accommodated in a disc-shaped cavity, or having the shape of a cylinder whose height is reduced with respect to the diameter of its own base, derived in the frame of the velocipede and lying in the plane defined by it.

The ring gear is coaxial to said disc-shaped cavity and slidingly rests on bearings secured to the frame of the velocipede, in correspondence with the edges of said disc-shaped cavity, so that the ring gear is free to rotate with respect to said frame, by sliding on said bearings.

Such ring gear is coupled with known transmission means such as, for instance, chains, belts, or wheelworks suitable for transferring motion to the wheel or wheels of the velocipede.

Very advantageously is the ring gear connected to a rod crossing the center of gravity of said gear by way of two or more spokes, said rod being oblique with respect to the axis of the gear itself, at the opposed ends of which the pedals are mounted.

The connection of the oblique rod to the ring gear by way of said spokes is implemented in correspondence with the median cross-section of the rod itself, hence in the middle of the longitudinal dimension of the rod.

In this way, a transmission assembly without bottom bracket is obtained, wherein the lever arm of the pedal is the same as that of a transmission system featuring a pin bottom bracket.

### Brief description of the drawings

**Figure 1** shows a possible version of the transmission assembly according to the present patent application which shows a ring gear (2), a disc-shaped cavity (11), bearings (3), a through rod consisting of a tubular element (6) connected to said gear (2) by way of two spokes (4), and a movable rod (55), coaxial to and sliding with respect to said tubular element (6). The figure also shows a plurality of spur gears (91, 93) co-operating with each other and suitable for transferring motion to the wheel o wheels of the velocipede; such gears are usually accommodated inside a cavity of the frame.

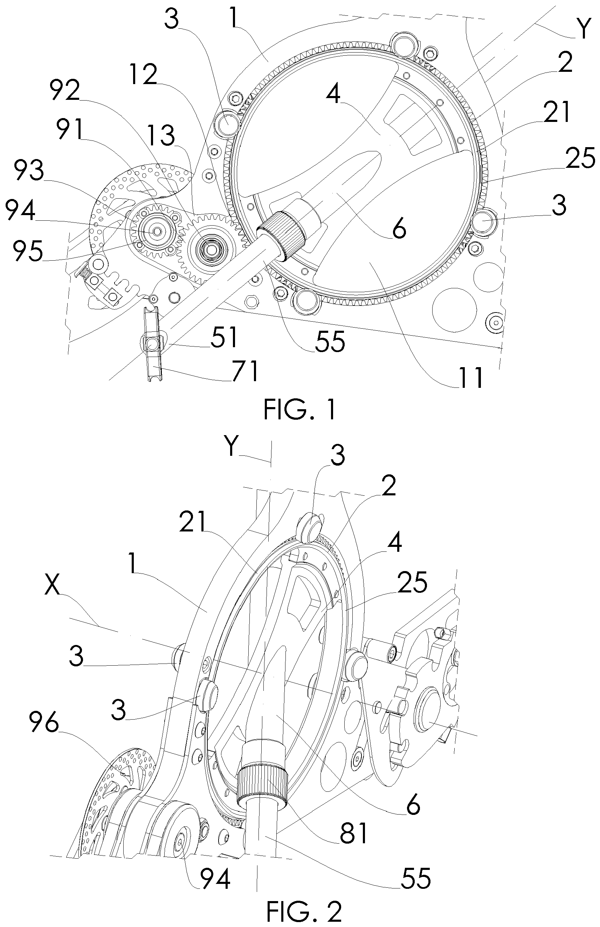

**Figure 2** shows an axonometric view of the transmission assembly, in which the bearings (3) located at both sides of the frame (1) are visible; also visible are the axis (Y) of the rod at the two ends of which pedals are mounted and the axis (X) about which the gear (2) rotates.

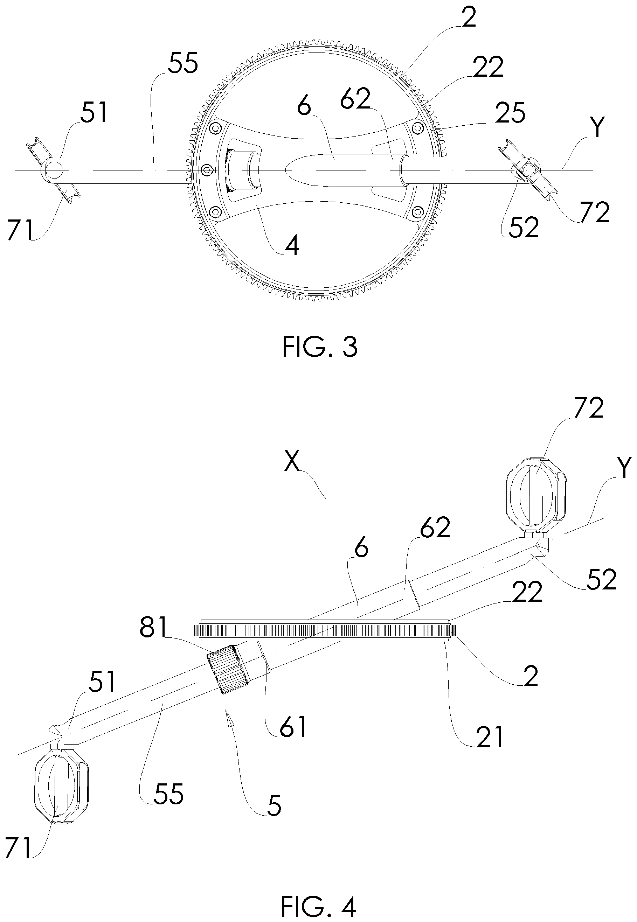

**Figure 3** shows a side view of the gear (2), the movable rod (55) being locked with respect to the tubular element (6) in its work position (A), i.e. with both pedals (71, 72) facing the outside as referred to the frame.
**Figure 4** shows a top view of the gear (2) and of the movable rod (55) locked with respect to the tubular element (6) in its work position (A); the figure shows the locking means consisting of a ring nut (81) screwed in at the end (61) of the tubular element (6).

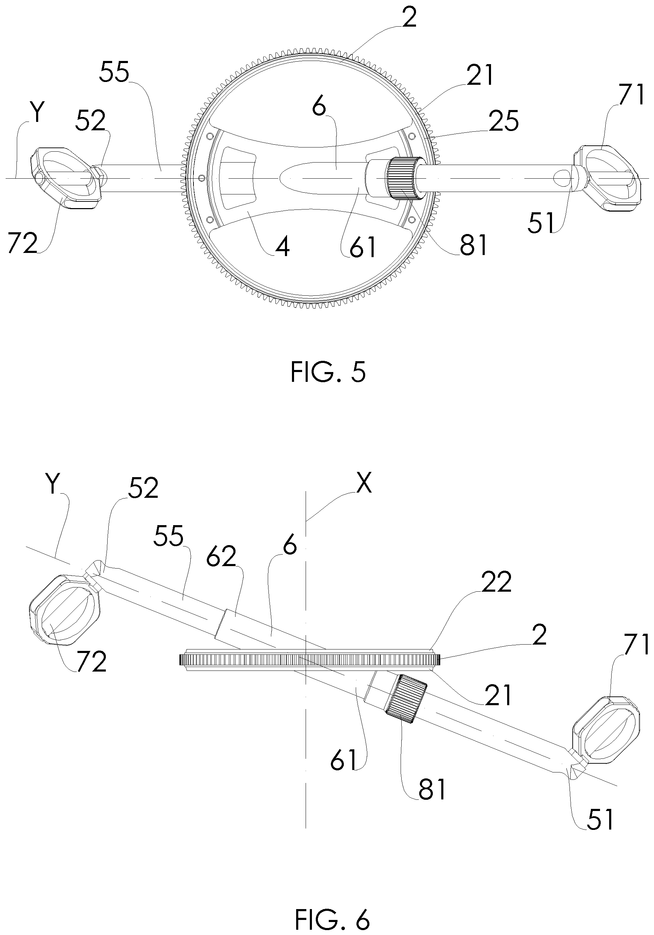

**Figure 5** shows a side view of the gear (2) and of the movable rod (55) locked with respect to the tubular element (6) in the rest position (B), i.e. with both pedals (71, 72) facing the frame.
**Figure 6** shows a top view of the gear (2) and of the movable rod (55) locked with respect to the tubular element (6) in the rest position (B).

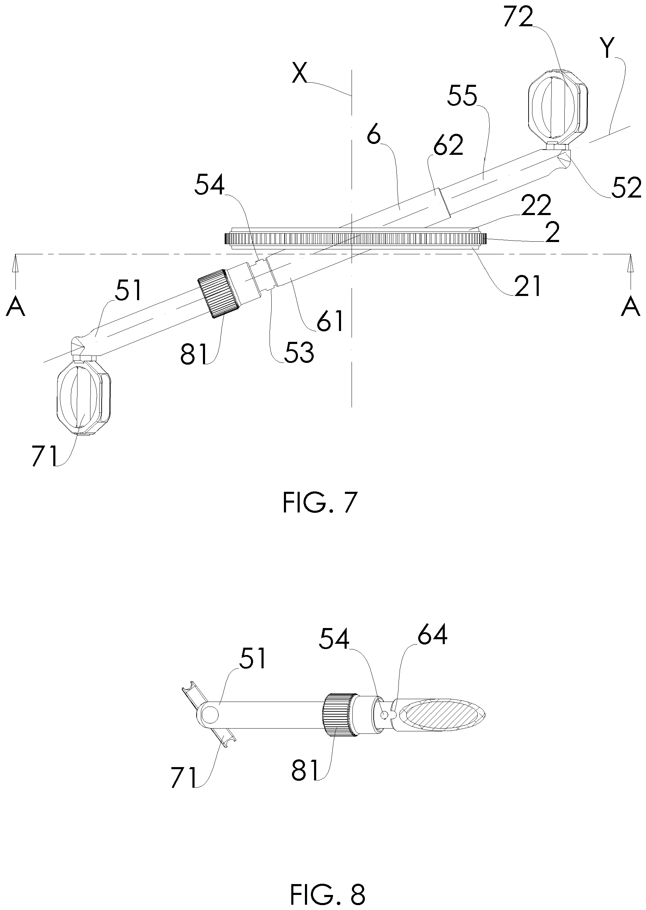

**Figure 7** shows a side view of the gear (2) and of the movable rod (55) disengaged with respect the tubular element (6), the ring nut (81) being unscrewed with respect to the end (61) of the tubular element (6); in correspondence with said end (61) of said tubular element (6) projections (53, 54) projecting from the movable rod (55) are also visible.
**Figure 8** shows a cross-section A-A of the movable rod (55) and of the tubular element (6) shown in figure 7, wherein is one of the two seats (64) suitable for accommodating said projections (53, 54) projecting from the movable rod (55) visible, the latter being in its work position (A) or in its rest position (B).

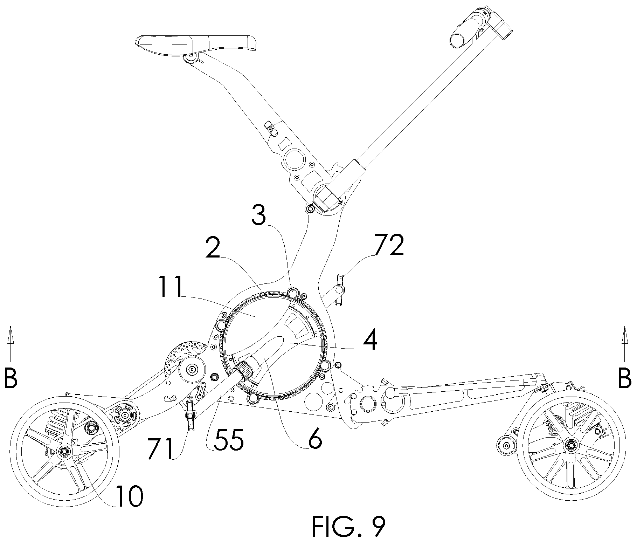

**Figure 9** shows a four-wheel velocipede incorporating a transmission assembly according to the present patent application.

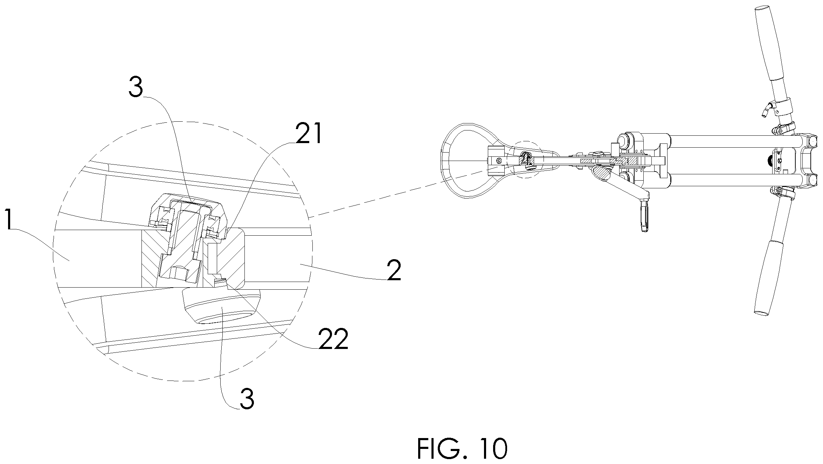

**Figure 10** shows a cross-section B-B of the transmission assembly incorporated in the four-wheel velocipede shown in figure 9; the figure shows the bearings (3) secured at both sides of the frame (1) of the velocipede and resting on the sliding annular surfaces (21, 22) located at the sides of the circumferential edge (25) of the gear (2).

### Detailed description of an embodiment of the invention

In its simplest embodiment, the transmission assembly for velocipedes without bottom bracket according to the present patent application comprises a ring gear (2) lying in the frame (1) of the velocipede, internally to a disc-shaped cavity (11) having dimensions slightly greater than those of said ring gear (2).

The ring gear (2) is coaxial to said disc-shaped cavity (11) and the axis of symmetry (X) common to said ring gear (2) and to said disc-shaped cavity (11) is perpendicular to the normal direction of the motion of the vehicle and consequently parallel to the axles of the front wheel and of the rear wheel.

The disc-shaped cavity (11) is preferably located in the lower part of the frame, in a longitudinal position intermediate between the axle of the front wheel and that of the rear wheel of the vehicle.

The ring gear (2) is supported in correspondence with its own external circumferential edge (25), at both sides of the gear itself, by bearings (3) secured to the frame (1) of the velocipede, so that the ring gear (2) is free to rotate with respect to said frame (1), by sliding on said bearings (3). According to a simple and practical embodiment, said bearings (3) are roller bearings.

In a possible embodiment, the ring gear (2) includes two sliding annular surfaces (21, 22) at the sides of the external circumferential edge (25) of the gear (2) itself, respectively; at both sides of the frame (1) there are secured bearings (3) in proximity to the disc-shaped seat (11), which rest on either sliding surface (21, 22) respectively. Preferably is the number of said bearings (3) equal to or greater than four for each side of the ring gear (2).

The ring gear (2) is connected by way of two or more spokes (4) to a rod (5), the latter crossing the center of gravity of the gear (2) and arranged according to an axis (Y) oblique with respect to the axis (X) of the gear (2) itself.

At the two opposed ends (51, 52) of said rod (5) there are rotationally coupled the pedals (71, 72) whereas the connection between the rod (5) and the ring gear (2) is in correspondence with the median cross-section of the rod (5), in the middle of the length of the same rod (5).

In a particularly advantageous embodiment, the middle part of said rod (5) consists of a tubular element (6) integral with said spokes (4), internally to which there is rotationally inserted a movable rod (55), coaxial to and slidable with respect to said tubular element (6); at the opposed ends of said movable rod (55) there are placed the pedals (71, 71) and the movable rod (55) can be made integral with said tubular element (6) by way of appropriates locking means.

By acting onto such locking means, it is possible to disengage the movable rod (55) from the tubular element (6), by thus making it slide and rotate with respect to said tubular element (6) in such a way as make it possible for it to assume two alternative operating positions: a first work position (A) wherein the pedals (71, 72) face outwards with respect to the frame (1), and a second rest position (B) wherein both pedals (71, 72) face the frame (1) .

Such second rest position (B) is very useful in order to reduce the lateral space occupation of the velocipede and make transportation or storage easier.

According to a possible embodiment, said locking means consist of an internally threaded ring nut (81) which engages a corresponding external threading present on a first end (61) of the tubular element (6) so that, by unscrewing said ring nut (81), the movable rod (55) disconnect from the tubular element (6) and can rotate and slide internally to the latter; in correspondence with one of its own opposed ends (61, 62), said tubular element (6) presents two seats, or notches, suitable for accommodating an equal number of projections (53, 54) projecting from the movable rod (55) whenever it is in its rest position (A). In a particularly simple embodiment of the present invention, said ring gear (2) engages transmission means to transfer its own rotary movement to a pinion (10) integral with the wheel or wheels of the velocipede, said means being, for instance, a transmission belt or a chain.

In an alternative and preferred embodiment, said motion transmission means comprise a plurality of spur gears co-operating with each other.

In this case, the ring gear (2), via an opening (12) of the disc-shaped cavity (11) of the frame (1) where it is accommodated, engages a first toothed pinion (91) integrally connected to a first shaft (92); said first pinion (91) in turn engages a second toothed pinion (93) connected to a second shaft (94).

According to an advantageous embodiment, said second pinion (93) is mounted on said second shaft (94) by way of a freewheel mechanism (95) such as a ratchet gear.

Said first pinion (91) and second pinion (93) can advantageously be accommodated in a seat (13) specifically derived internally to the frame (1) of the velocipede. Integral with said second shaft (94) there is mounted a third pinion (96), whose teeth engage a chain or a belt, or co-operate with other transmission means of a known type to transfer motion to the pinion (10) integral with the driving wheel, or driving wheels, of the velocipede.

## Claims

1. A transmission assembly for velocipedes without any bottom bracket comprising a ring gear (2) rotating around an axis (X) parallel to the axes of the wheels of the velocipede, motion transmission means suitable for engaging said ring gear (2) and suitable for transferring the rotation of said ring gear (2) to the driving wheel or to the driving wheels of the velocipede, two sets of bearings (3) fixed on each side of the frame (1) respectively along the perimeter of a disc-shaped cavity (11) inside which said ring gear (2) is coaxially accommodated, the outer circumferential edge (25) of the latter featuring on every side at least one sliding annular surface (21, 22) slidingly resting on said bearings (3) thus enabling said ring gear (2) to rotate freely with respect to said disc-shaped cavity (11), **characterized in that** said ring gear (2) is joined via two or more spokes (4) to the median section of a rod (5) with the opposite ends (51, 52) of which the pedals (71, 72) are rotationally coupled, said rod (5) having an axis of symmetry (Y) oblique with respect to said axis (X) which it intersects in correspondence with the center of gravity of said ring gear (2).

2. A transmission assembly according to the previous claim, **characterized in that** said rod (5) consists of a tubular element (6) integrally connected to said two or more spokes (4) and of a movable rod (55) at the opposite ends of which the pedals (71, 72) are located, said movable rod (55) being coaxially inserted inside said tubular element (6) and being capable of sliding and rotating with respect to said tubular element (6); the movable rod (55) can be made integral with said tubular element (6) by way of appropriate locking means.

3. A transmission assembly according to the previous claim, **characterized in that** by acting onto said locking means it is possible to disengage the movable rod (55) so as to make it free to slide and rotate internally to said tubular element (6) so as to be able to assume two alternative operating positions: a first work position (A) wherein the pedals (71, 72) face the outside with respect to the frame (1) and a second rest position (B) wherein both pedals (71, 72) face the frame (1).

4. A transmission assembly according to the previous claim, **characterized in that** said locking means consist of an internally threaded ring-nut (81), which engages a corresponding external threading located in correspondence with a first end (61) of the tubular element (6) and, by unscrewing said ring-nut (81), the movable rod (55) disengages the tubular element (6) and is free to rotate and slide with respect to the latter, so as to be capable of assuming the operating position (A) or the rest position (B) alternatively.

5. A transmission assembly according to the previous claim, **characterized in that** at one of its opposite ends (61, 62) the said tubular element (6) includes two notches (64) suitable for accommodating an equal number of projections (53, 54) projecting from the movable rod (55), whenever it is in its operating position (A).

6. A transmission assembly according to any preceding claim, **characterized in that** said motion transmission means consist of a belt or of a chain which engages said ring gear (2).

7. A transmission assembly according to any preceding claim, **characterized in that** said motion transmission means consist of a plurality of spur gears parallel thereto.

8. A transmission assembly according to the previous claim, **characterized in that** said ring gear (2), via an opening (12) of the disc-shaped cavity (11) of the frame (1) wherein it is accommodated, engages a first toothed pinion (91) integrally connected to a first shaft (92); said first pinion (91) in turn engages a second toothed pinion (93) connected to a second shaft (94); a third toothed pinion (96) is mounted on the latter, and its teeth engage a chain or a belt, or cooperate with other transmission means of a known type, to transfer motion to the pinion (10) integral with the driving wheel, or the driving wheels, of the velocipede.

9. A transmission assembly according to the previous claim, **characterized in that** said second pinion (93) is mounted on said second shaft (94) by way of a freewheel mechanism (95) like a ratchet gear.

10. A transmission assembly according to any preceding claim, **characterized in that** the number of said bearings (3) equals or is greater than four for every side of said disc-shaped cavity (11).

## Patentansprüche

1. Getriebeanordnung für Velozipede ohne Tretlager, umfassend einen Zahnkranz (2), der sich um eine Achse (X) parallel zu den Achsen der Räder des Velozipeds dreht, Bewegungsübertragungsmittel, die geeignet sind, um in den Zahnkranz (2) einzugreifen und die geeignet sind, um die Drehung des Zahnkranzes (2) auf das Antriebsrad oder die Antriebsräder des Velozipeds zu übertragen, zwei Sätze Lager (3), die an jeder Seite des Rahmens (1) jeweils entlang des Umfangs eines scheibenförmigen Hohlraums (11) fixiert sind, in dem der Zahnkranz (2) koaxial untergebracht ist, wobei die äußere Umfangskante (25) des Letzteren an jeder Seite mindestens eine gleitende ringförmige Oberfläche (21, 22) umfasst, die gleitend auf den Lagern (3) ruht, sodass dem Zahnkranz (2) ermöglicht wird, sich im Vergleich zum scheibenförmigen Hohlraum (11) frei zu drehen, **dadurch gekennzeichnet, dass** der Zahnkranz (2) mittels einer oder mehreren Speichen (4) mit dem mittigen Teil einer Stange (5) zusammengefügt ist, mit deren gegenständigen Enden (51, 52) die Pedale (71, 72) rotierend gekuppelt sind, wobei die Stange (5) eine Symmetrieachse (Y) aufweist, die schräg zur Achse (X) verläuft, die diese am Schwerpunkt des Zahnkranzes (2) schneidet.

2. Getriebeanordnung nach dem vorhergehenden Anspruch, **dadurch gekennzeichnet, dass** die Stange (5) aus einem rohrförmigen Element (6) besteht, das fest mit den zwei oder mehr Speichen (4) verbunden ist, und einer bewegbaren Stange (55), an deren entgegengesetzten Enden die Pedale (71, 72) angeordnet sind, wobei die bewegbare Stange (55) koaxial in das rohrförmige Element (6) eingesetzt und in der Lage ist, zu gleiten und sich zum rohrförmigen Element (6) zu drehen, wobei die bewegbare Stange (55) durch geeignete Verriegelungsmittel fest mit dem rohrförmigen Element (6) verbunden werden kann.

3. Getriebeanordnung nach dem vorhergehenden Anspruch, **dadurch gekennzeichnet, dass** es durch Einwirken auf die Verriegelungsmittel möglich ist, die bewegbare Stange (55) zu lösen, sodass diese freigegeben wird, um zu gleiten und sich innenseitig zum rohrförmigen Element (6) zu drehen und so in der Lage ist, zwei alternative Betriebspositionen einzunehmen: eine erste Arbeitsposition (A), in der die Pedale (71, 72) gegenüber dem Rahmen (1) der Außenseite zugewandt sind, und eine zweite Ruheposition (B), in der beide Pedale (71, 72) dem Rahmen (1) zugewandt sind.

4. Getriebeanordnung nach dem vorhergehenden Anspruch, **dadurch gekennzeichnet, dass** die Verriegelungsmittel aus einer innenseitig mit einem Gewinde versehenen Ringmutter (81) bestehen, die in ein entsprechendes Außengewinde eingreift, das in Verbindung mit einem ersten Ende (61) des rohrförmigen Elements (6) angeordnet ist, und dass die bewegbare Stange (55) durch Aufschrauben der Ringmutter (81) das rohrförmige Element (6) löst und sich gegenüber diesem frei drehen und gleiten kann, sodass sie in der Lage ist, alternativ die Betriebsposition (A) oder die Ruheposition (B) einzunehmen.

5. Getriebeanordnung nach dem vorhergehenden Anspruch, **dadurch gekennzeichnet, dass** das rohrförmige Element (6) an einem seiner entgegengesetzten Enden (61, 62) zwei Nuten (64) einschließt, die geeignet sind, um eine gleiche Anzahl an Vorsprüngen (53, 54) aufzunehmen, die aus der bewegbaren Stange (55) hervorstehen, wenn es sich in seiner Betriebsposition (A) befindet.

6. Getriebeanordnung nach einem der vorhergehenden Ansprüche, **dadurch gekennzeichnet, dass** die Bewegungsübertragungsmittel aus einem Riemen oder einer Kette bestehen, die in den Zahnkranz (2) eingreifen.

7. Getriebeanordnung nach einem der vorhergehenden Ansprüche, **dadurch gekennzeichnet, dass** die Bewegungsübertragungsmittel aus einer Vielzahl an Stirnrädern bestehen, die parallel dazu angeordnet sind.

8. Getriebeanordnung nach dem vorhergehenden Anspruch, **dadurch gekennzeichnet, dass** der Zahnkranz (2) über eine Öffnung (12) des scheibenförmigen Hohlraums (11) des Rahmens (1), in dem er untergebracht ist, in ein erstes Zahnritzel (91) eingreift, fest mit einer ersten Welle (92) verbunden, wobei das erste Ritzel (91) wiederum in ein zweites Zahnritzel (93) eingreift, verbunden mit einer zweiten Welle (94), wobei ein drittes Zahnritzel (96) auf Letzterer montiert ist und dessen Verzahnungen in eine Kette oder einen Riemen eingreifen oder mit anderen Übertragungsmitteln eines bekannten Typs kooperieren, um Bewegung auf das Ritzel (10) zu übertragen, fest verbunden mit dem Antriebsrad oder den Antriebsrädern des Velozipeds.

9. Getriebeanordnung nach dem vorhergehenden Anspruch, **dadurch gekennzeichnet, dass** das zweite Ritzel (93) auf der zweiten Welle (94) mittels eines Freilaufmechanismus (95) wie einer Sperrklinke montiert ist.

10. Getriebeanordnung nach einem der vorhergehenden Ansprüche, **dadurch gekennzeichnet, dass** die Anzahl der Lager (3) größer oder gleich vier für jede Seite des scheibenförmigen Hohlraums (11) ist.

## Revendications

1. Ensemble de transmission pour vélocipèdes sans mouvement central comprenant une couronne dentée (2) tournant autour d'un axe (X) parallèle aux axes des roues du vélocipède, des moyens de transmission du mouvement adaptés pour engager ladite couronne dentée (2) et adaptés pour transférer la rotation de ladite couronne (2) à la roue motrice ou aux roues motrices du vélocipède, deux groupes de roulements (3) fixés respectivement à chaque côté du cadre (1) le long du périmètre d'une cavité discoïdale (11) à l'intérieur de laquelle ladite couronne dentée (2) est logée d'une manière coaxiale, le bord circonférentiel extérieur (25) de celle-ci présentant de chaque côté au moins une surface annulaire de glissement (21, 22) appuyant d'une manière glissante sur lesdits roulements (3) ainsi permettant à ladite couronne dentée (2) de tourner librement par rapport à ladite cavité discoïdale (11), **caractérisé en ce que** ladite couronne dentée (2) est reliée par l'intermédiaire de deux ou plusieurs bras (4) à la section médiane d'une tige (5) aux extrémités opposées (51, 52) de laquelle les pédales (71, 72) sont accouplées d'une manière rotationnelle, ladite tige (5) ayant un axe de symétrie (Y) oblique par rapport audit axe (X) avec lequel elle se coupe en correspondance du centre de gravité de ladite couronne (2).

2. Ensemble de transmission selon la revendication précédente, **caractérisé en ce que** ladite tige (5) comprend un élément tubulaire (6) solidairement branché auxdits un ou plusieurs bras (4) et une tige mobile (55) aux extrémités opposées de laquelle les pédales (71, 72) sont placées, ladite tige mobile (55) étant insérée d'une manière coaxiale à l'intérieur dudit élément tubulaire (6) et pouvant glisser et tourner par rapport audit élément tubulaire (6); la tige mobile (55) pouvant être rendre solidaire dudit élément tubulaire (6) par l'intermédiaire de moyens de blocage appropriés.

3. Ensemble de transmission selon la revendication précédente, **caractérisé en ce que** en agissant sur lesdits moyens de blocage, il est possible de désengager la tige mobile (55) tout en la rendant libre de glisser et de tourner à l'intérieur dudit élément tubulaire (6) de telle sorte à pouvoir prendre deux positions opérationnelles alternatives: une première position de travail (A) dans laquelle les pédales (71, 72) sont tournées vers l'extérieur par rapport au cadre (1), et une deuxième position de repos (B) dans laquelle toutes les deux pédales (71, 72) sont tournées vers la cadre (1).

4. Ensemble de transmission selon la revendication précédente, **caractérisé en ce que** lesdits moyens de blocage comprennent une frette (81), filetée à l'intérieur, laquelle engage un filetage extérieur correspondant placé à une première extrémité (61) de l'élément tubulaire (6) et, en dévissant ladite frette (81), la tige mobile (55) désengage l'élément tubulaire (6) et peut tourner et glisser par rapport à celui-ci, de telle sorte à pouvoir prendre alternativement la position opérationnelle (A) ou la position de repos (B).

5. Ensemble de transmission selon la revendication précédente, **caractérisé en ce que,** en correspondance d'une de ses propres extrémités opposées (61, 62), ledit élément tubulaire (6) présente deux évidements (64) adaptés pour recevoir autant de protubérances (53, 54) faisant saillie par rapport à la tige mobile (55) lorsque celle-ci est dans sa position opérationnelle (A).

6. Ensemble de transmission selon l'une quelconque des revendications précédentes, **caractérisé en ce que** lesdits moyens de transmission du mouvement comprennent une courroie ou une chaîne qui engage ladite couronne dentée (2) .

7. Ensemble de transmission selon l'une quelconque des revendications précédentes, **caractérisé en ce que** lesdits moyens de transmission du mouvement comprennent une pluralité d'engrenages cylindriques parallèles à eux-mêmes.

8. Ensemble de transmission selon la revendication précédente, **caractérisé en ce que** ladite couronne dentée (2) engage, à travers une ouverture (12) de la cavité discoïdale (11) du cadre (1) dans lequel elle est logée, un premier pignon denté (91) solidairement branché à un premier arbre (92); ledit premier pignon (91) à son tour engage un deuxième pignon denté (93) branché à un deuxième arbre (94); sur celui-ci un troisième pignon denté (96) est monté, dont les dents engagent une chaîne ou une courroie, ou bien coopèrent avec d'autres moyens de transmission d'un type connu pour transférer le mouvement au pignon (10) solidaire de la roue motrice, ou des roues motrices, du vélocipède.

9. Ensemble de transmission selon la revendication précédente, **caractérisé en ce que** ledit deuxième pignon (93) est monté sur ledit deuxième arbre (94) par l'intermédiaire d'un mécanisme à roue libre (95), tel qu'un encliquetage.

10. Ensemble de transmission selon l'une quelconque des revendications précédentes, **caractérisé en ce que** le nombre desdits roulements (3) est égal à ou plus élevé que quatre pour chaque côté de ladite cavité discoïdale (11).
